# EUROPÄISCHE PATENTSCHRIFT

(11) **EP 2 609 032 B1**
(45) Veröffentlichungstag und Bekanntmachung des Hinweises auf die Patenterteilung: **01.10.2014**
(21) Anmeldenummer: 11748326.3
(22) Anmeldetag: 29.07.2011
(51) Int. Cl.: C01B 15/013, C01B 15/037, B01D 1/28

(54) **VERFAHREN ZUM KONZENTRIEREN VON WÄSSRIGER WASSERSTOFFPEROXIDLÖSUNG**
METHOD FOR CONCENTRATING AN AQUEOUS HYDROGEN PEROXIDE SOLUTION
PROCÉDÉ DE CONCENTRATION D'UNE SOLUTION AQUEUSE DE PEROXYDE D'HYDROGÈNE

(30) Priorität: 25.08.2010 DE 102010039748
(43) Veröffentlichungstag der Anmeldung: 03.07.2013
(73) Patentinhaber: Evonik Degussa GmbH, 45128 Essen (DE)
(72) Erfinder: EICKHOFF, Hubertus, 63755 Alzenau (DE); LODE, Florian, 61137 Schöneck (DE); AREVALO, Eduardo, 63486 Bruchköbel (DE); BRENDEL, Marc, 63486 Bruchköbel (DE); WALLERT, Claudia, 45721 Haltern (DE)
(86) Internationale Anmeldenummer: PCT/EP2011/063069
(87) Internationale Veröffentlichungsnummer: WO 2012/025333

(56) Entgegenhaltungen:
- DE-B- 1 084 249
- GB-A- 907 421
- US-A- 5 171 407
- "Separation Technology for the Chemical process Industry", , 18. Oktober 2008 (2008-10-18), Seiten 1-24, XP55008815, Gefunden im Internet: URL:http://wayback.archive.org/web/*/http: //www.sulzerchemtech.com/en/portaldata/11/ Resources//Brochures/* [gefunden am 2011-10-05]

## Beschreibung

Wasserstoffperoxid wird üblicherweise nach dem Anthrachinonverfahren hergestellt, in dem es durch Extraktion der im Anthrachinonverfahren eingesetzten Arbeitslösung in Form einer wässrigen Lösung mit einem Gehalt an 25 bis 40 Gew.-% Wasserstoffperoxid anfällt. Um Transportkosten zu sparen, wird dieses Rohprodukt des Anthrachinonverfahrens durch Verdampfen von Wasser auf eine handelsübliche Konzentration von 50, 60 oder 70 Gew.-% konzentriert. Für spezielle Anwendungen wird ein gereinigtes Wasserstoffperoxid benötigt, aus dem schwerflüchtige Verunreinigungen durch Destillation des Wasserstoffperoxids abgetrennt sind.

Bei dem Konzentrieren von Wasserstoffperoxid lässt sich der Energieeinsatz für die Verdampfung von Wasser durch eine Kompression von bei der Verdampfung erhaltenem Wasserdampf und die Beheizung des Verdampfers mit diesen komprimierten Brüden verringern, wie aus A. Meili, Proceedings of the 2nd International Conference on Process Intensification in Practice, BHR Group Conference Series 28, 1997, Seiten 309 bis 318, sowie dem Prospekt "H2O2 Sulzer Chemtech Distillation and Heat-Pump Technology for the Concentration and Purification of Hydrogen Peroxide" der Firma Sulzer Chemtech bekannt ist.

Die aus dem Stand der Technik bekannten Verfahren haben den Nachteil, dass zur Herstellung von konzentriertem Wasserstoffperoxid unterschiedlicher Konzentration die Destillationsbedingungen verändert werden müssen und bei einer solchen Veränderung der Destillationsbedingungen vorübergehend ein nicht spezifikationsgerechtes Produkt anfällt, das in den Prozess zurückgeführt werden muss. So weit bei den bekannten Verfahren ein durch Verdampfen von Wasser aufkonzentriertes Wasserstoffperoxid und ein destilliertes Wasserstoffperoxid unterschiedlicher Konzentration erhalten werden, lässt sich das Mengenverhältnis zwischen diesen beiden Produkten nur in engen Grenzen variieren. Es besteht deshalb Bedarf nach einem energieeffizienten Verfahren zum Konzentrieren von wässriger Wasserstoffperoxidlösung, mit dem sich gleichzeitig mindestens zwei konzentrierte Wasserstoffperoxidlösungen unterschiedlicher Konzentration im Bereich von 50 bis 70 Gew.-% Wasserstoffperoxid in frei wählbarem Verhältnis herstellen lassen.

Es wurde nun gefunden, dass sich diese Aufgabe lösen lässt, indem eine Vorrichtung zum Konzentrieren von wässriger Wasserstoffperoxidlösung mit einem Vorverdampfer, einer Destillationskolonne und einem Brüdenverdichter so betrieben wird, dass sowohl Brüden aus dem Vorverdampfer als auch ein Teil des im Vorverdampfer erhaltenen flüssigen Sumpfprodukts der Destillationskolonne zugeführt werden.

Gegenstand der Erfindung ist deshalb ein Verfahren zum Aufkonzentrieren von wässriger Wasserstoffperoxidlösung zu zwei Wasserstoffperoxidströmen unterschiedlicher Konzentration, bei dem in einer Vorrichtung umfassend einen Vorverdampfer, eine Destillationskolonne und einen Brüdenverdichter kontinuierlich die zu konzentrierende wässrige Wasserstoffperoxidlösung dem Vorverdampfer zugeführt wird, im Vorverdampfer durch Verdampfung erzeugte Brüden der Destillationskolonne zugeführt werden, ein Teil des im Vorverdampfer erhaltenen Sumpfprodukts der Destillationskolonne flüssig zugeführt wird und im Vorverdampfer erhaltenes Sumpfprodukt als ein erster konzentrierter Wasserstoffperoxidstrom entnommen wird, in der Destillationskolonne erzeugte Brüden der Destillationskolonne am Kolonnenkopf entnommen, über den Brüdenverdichter verdichtet und zur Beheizung des Vorverdampfers verwendet werden und in der Destillationskolonne erhaltenes Sumpfprodukt als ein zweiter konzentrierter Wasserstoffperoxidstrom entnommen wird.

Figur 1 zeigt ein aus dem Prospekt "H₂O₂ Sulzer Chemtech Distillation and Heat-Pump Technology for the Concentration and Purification of Hydrogen Peroxide" der Firma Sulzer Chemtech, Seite 6 bekanntes Verfahren.

Figur 2 zeigt eine Ausführungsform des erfindungsgemäßen Verfahrens.

Das erfindungsgemäße Verfahren wird in einer Vorrichtung durchgeführt, die einen Vorverdampfer, eine Destillationskolonne und einen Brüdenverdichter umfasst.

Als Vorverdampfer können alle aus dem Stand der Technik bekannten Vorrichtungen eingesetzt werden, die dem Fachmann als zur Verdampfung aus einer wässrigen Wasserstoffperoxidlösung geeignet bekannt sind. Vorzugsweise wird als Vorverdampfer ein einstufiger Verdampfer eingesetzt, besonders bevorzugt ein einstufiger Umlaufverdampfer. In einer weiteren bevorzugten Ausführungsform ist der Vorverdampfer ein Fallfilmverdampfer.

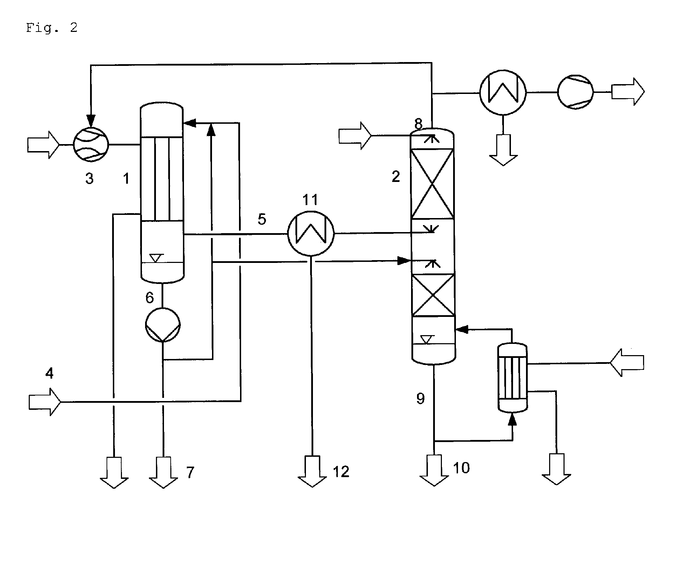

Als Destillationskolonne können alle aus dem Stand der Technik bekannten Kolonnen eingesetzt werden, die dem Fachmann als zur Destillation einer wässrigen Wasserstoffperoxidlösung geeignet bekannt sind. Vorzugsweise wird eine Destillationskolonne eingesetzt, die einen Verstärkungsteil und einen Abtriebsteil, sowie mindestens eine Einspeisung zwischen diesen Teilen aufweist. Bevorzugt wird eine Destillationskolonne eingesetzt, die zur Verbesserung der Trennleistung eine Schüttung aus Füllkörpern oder eine strukturierte Packung enthält. Die Füllkörper oder die strukturierte Packung können aus Metall, Kunststoff oder einem keramischen Material sein, wobei eine Packung oder Schüttung aus Metall besonders bevorzugt ist. Der zur Destillationskolonne gehörige Verdampfer kann als separater Verdampfer ausgeführt sein, wie in Figur 2 gezeigt, oder kann als Teil der Destillationskolonne ausgeführt sein, wie aus EP 0 419 406 A1 Figur 2 bekannt. Die Destillationskolonne weist vorzugsweise am Kolonnenkopf eine Zuleitung auf, mit der Wasser zur Erzeugung des Rücklaufs eingespeist werden kann.

Als Brüdenverdichter können alle aus dem Stand der Technik zur Verdichtung von Wasserdampf bekannten Vorrichtungen eingesetzt werden. Vorzugsweise wird als Brüdenverdichter ein mechanischer Brüdenkompressor eingesetzt, besonders bevorzugt ein einstufiger mechanischer Brüdenkompressor. Mit einem mechanischen Brüdenkompressor wird eine hohe Energieeffizienz erreicht und ein weiter Betriebsbereich ermöglicht. Alternativ kann als Brüdenverdichter eine Gasstrahlpumpe eingesetzt werden, wobei vorzugsweise eine Gasstrahlpumpe mit Wasserdampf als Treibgas eingesetzt wird. Die Verwendung einer Gasstrahlpumpe als Brüdenverdichter hat die Vorteile niedriger Investitionskosten und einer hohen Verfügbarkeit auf Grund der einfacheren Technik.

Bei dem erfindungsgemäßen Verfahren wird die zu konzentrierende wässrige Wasserstoffperoxidlösung kontinuierlich dem Vorverdampfer zugeführt. Vorzugsweise handelt es sich dabei um eine in der Extraktionsstufe eines Anthrachinonverfahrens zur Herstellung von Wasserstoffperoxid erhaltene wässrige Wasserstoffperoxidlösung, die 25 bis 49 Gew.-% Wasserstoffperoxid enthält. Die zu konzentrierende wässrige Wasserstoffperoxidlösung enthält vorzugsweise noch mindestens einen Stabilisator zur Stabilisierung des Wasserstoffperoxids gegen Zersetzung. Als Stabilisator können alle zur Stabilisierung von Wasserstoffperoxid bekannten Verbindungen eingesetzt werden. Vorzugsweise werden als Stabilisator Alkalimetallstannate, Alkalimetallpyrophosphate, Alkalimetallpolyphosphate; sowie Chelatkomplexbildner aus der Reihe der Hydroxycarbonsäuren, Aminocarbonsäuren, Aminophosphonsäuren, Phosphonocarbonsäuren und Hydroxyphosphonsäuren und deren Alkalimetallsalze verwendet. Besonders bevorzugte Stabilisatoren sind Natriumstannat, Na₄P₂O₇, Na₂H₂P₂O₇, Aminotris(methylenphosphonsäure) und deren Natriumsalze, sowie 1-Hydroxyethan-2,2-diphosphonsäure und deren Natriumsalze.

Im Vorverdampfer wird ein Teil der zugeführten, zu konzentrierenden wässrigen Wasserstoffperoxidlösung verdampft, wobei die Verdampfung vorzugsweise bei einem Druck von 70 bis 130 mbar und einer Sumpftemperatur im Verdampfer von 49 bis 69 °C durchgeführt wird. Die im Vorverdampfer durch Verdampfung erzeugten Brüden werden ganz oder teilweise der Destillationskolonne zugeführt, wobei die Brüden vorzugsweise über einen zusätzlichen Kühler geführt werden, in dem ein Teil der Brüden kondensiert und als konzentrierter Wasserstoffperoxidstrom entnommen wird. Durch eine solche partielle Kondensation der Brüden kann im erfindungsgemäßen Verfahren mit geringem Aufwand zusätzlich zu zwei aufkonzentrierten Wasserstoffperoxidströmen unterschiedlicher Konzentration auch ein destillierter und damit von schwerflüchtigen Verunreinigungen gereinigter Wasserstoffperoxidstrom erhalten werden. Die im Vorverdampfer durch Verdampfung erzeugten Brüden werden der Destillationskolonne vorzugsweise in einem mittleren Abschnitt, d.h. zwischen dem Abtriebsteil und dem Verstärkungsteil der Destillationskolonne, zugeführt. Durch die Zuführung der Brüden in einem mittleren Abschnitt der Destillationskolonne lässt sich der Energiebedarf der Destillation verringern.

Von dem im Vorverdampfer erhaltenen Sumpfprodukt wird ein Teil der Destillationskolonne flüssig zugeführt und der restliche Teil wird als ein erster konzentrierter Wasserstoffperoxidstrom entnommen. Das der Destillationskolonne flüssig zugeführte Sumpfprodukt aus dem Vorverdampfer wird der Destillationskolonne vorzugsweise in einem mittleren Abschnitt, d.h. zwischen dem Abtriebsteil und dem Verstärkungsteil der Destillationskolonne, zugeführt. Durch die Zuführung des flüssigen Sumpfprodukts in einem mittleren Abschnitt der Destillationskolonne lässt sich der Energiebedarf der Destillation verringern.

In der Destillationskolonne wird durch Wärmezufuhr Wasser verdampft und das dadurch erhaltene Sumpfprodukt der Destillationskolonne als ein zweiter konzentrierter Wasserstoffperoxidstrom entnommen. Die dabei erzeugten Brüden werden der Destillationskolonne am Kolonnenkopf entnommen, ganz oder teilweise über den Brüdenverdichter verdichtet und zur Beheizung des Vorverdampfers verwendet. So weit die der Destillationskolonne entnommenen Brüden nicht dem Brüdenverdichter zugeführt werden, werden sie in einem Kondensator der Destillationskolonne kondensiert. Die Destillationskolonne wird vorzugsweise bei einem Druck am Kolonnenkopf von 60 bis 120 mbar und bei einer Sumpftemperatur von 51 bis 74 °C betrieben. Die Destillationskolonne wird vorzugsweise so betrieben, dass die Temperatur im Sumpf der Destillationskolonne um 5 bis 15 °C höher als die Temperatur im Sumpf des Vorverdampfers ist und die Konzentration des zweiten konzentrierten Wasserstoffperoxidstroms höher ist als die Konzentration des ersten konzentrierten Wasserstoffperoxidstroms. Durch eine solche Wahl der Temperaturen in der Destillationskolonne und im Vorverdampfer lässt sich der Energiebedarf für die Brüdenverdichtung gering halten. In einer bevorzugten Ausführungsform wird zur Erzeugung des Kolonnenrücklaufs kein kondensiertes Kopfprodukt der Kolonne verwendet, sondern es wird am Kolonnenkopf Wasser flüssig eingespeist. Damit lässt sich ein besonders geringer Gehalt an Wasserstoffperoxid in den Brüden erreichen und Verluste an Wasserstoffperoxid über die Brüden minimieren.

Der zum Betrieb der Destillationskolonne erforderliche Druck wird vorzugsweise durch eine Vakuumpumpe erzeugt, die mit dem Kolonnenkopf verbunden ist, vorzugsweise über den Kondensator der Destillationskolonne. Der zum Betrieb des Vorverdampfers erforderliche Druck wird vorzugsweise über einen Druckausgleich zwischen Destillationskolonne und Vorverdampfer über die Leitung, mit der die im Vorverdampfer erzeugten Brüden der Destillationskolonne zugeführt werden, eingestellt.

Mit dem erfindungsgemäßen Verfahren lassen sich ausgehend von einer wässrigen Wasserstoffperoxidlösung gleichzeitig zwei konzentrierte Wasserstoffperoxidströme unterschiedlicher Konzentration erhalten, wobei die Konzentration beider Ströme vorzugsweise im Bereich von 40 bis 80 Gew.-% und besonders bevorzugt im Bereich von 49 bis 75 Gew.-% liegt. Dabei kann das Mengenverhältnis zwischen den beiden Strömen in weiten Grenzen eingestellt werden, indem für die in der Destillationskolonne erhaltenen Brüden das Verhältnis zwischen dem Anteil, der über den Brüdenverdichter zur Beheizung des Vorverdampfers verwendet wird und dem Anteil, der im Kondensator der Destillationskolonne kondensiert wird, eingestellt wird und indem für das im Vorverdampfer erhaltene Sumpfprodukt das Verhältnis zwischen dem Anteil, der der Destillationskolonne flüssig zugeführt wird und dem Anteil, der als erster konzentrierter Wasserstoffperoxidstrom entnommen wird, eingestellt wird.

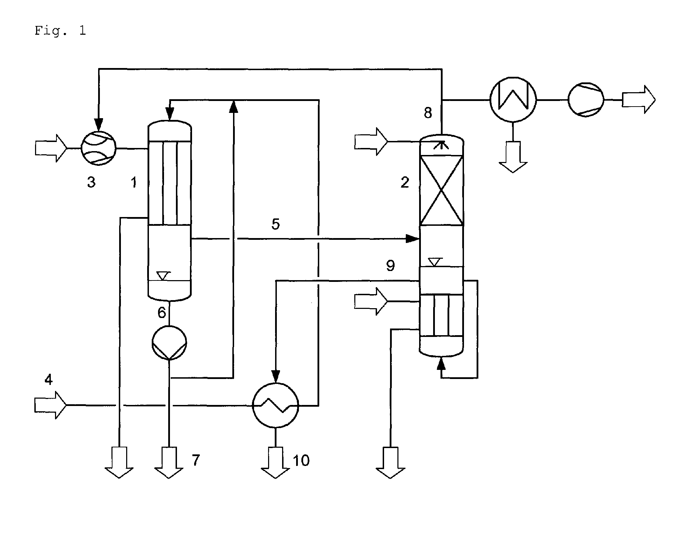

Die Figuren 1 und 2 illustrieren das erfindungsgemäße Verfahren im Vergleich mit einem aus dem Stand der Technik bekannten Verfahren.

Figur 1 zeigt ein aus dem Prospekt "H₂O₂ Sulzer Chemtech Distillation and Heat-Pump Technology for the Concentration and Purification of Hydrogen Peroxide" der Firma Sulzer Chemtech, Seite 6 bekanntes Verfahren. Dabei wird die zu konzentrierende Wasserstoffperoxidlösung (4) einem Vorverdampfer (1) zugeführt und im Vorverdampfer durch Verdampfung erzeugte Brüden (5) werden der Destillationskolonne (2) zugeführt. Das im Vorverdampfer (1) erhaltene Sumpfprodukt (6) wird als erster konzentrierter Wasserstoffperoxidstrom (7) entnommen, im Prospekt der Firma Sulzer als TG (Purge) bezeichnet. Die in der Destillationskolonne (2) erzeugten Brüden (8) werden der Destillationskolonne (2) am Kolonnenkopf entnommen, über den Brüdenverdichter (3) verdichtet und zur Beheizung des Vorverdampfers (1) verwendet. In der Destillationskolonne (2) erhaltenes Sumpfprodukt (9) wird als ein zweiter konzentrierter Wasserstoffperoxidstrom (10) entnommen, im Prospekt der Firma Sulzer als CG (Product) bezeichnet. Bei diesem Verfahren muss alles Wasserstoffperoxid, das mit dem Wasserstoffperoxidstrom (10) entnommen wird, im Vorverdampfer (1) verdampft werden und das Mengenverhältnis der Wasserstoffperoxidströme (7) und (10) kann bei vorgegebener Konzentration der beiden Wasserstoffperoxidströme nur in engen Grenzen eingestellt werden.

Figur 2 zeigt eine Ausführungsform des erfindungsgemäßen Verfahrens. Im Unterschied zu dem bekannten Verfahren von Figur 1 wird bei diesem Verfahren ein Teil des im Vorverdampfer (1) erhaltenen Sumpfprodukts (6) der Destillationskolonne flüssig zugeführt. Durch die Einstellung des Anteils des Sumpfprodukts (6), der der Destillationskolonne zugeführt wird und des Anteils, der als konzentrierter Wasserstoffperoxidstrom (7) entnommen wird, lässt sich bei dem erfindungsgemäßen Verfahren auch bei vorgegebenen Konzentrationen der Wasserstoffperoxidströme (7) und (10) das Mengenverhältnis zwischen diesen Strömen in weiten Grenzen einstellen. Da der Anteil des eingesetzten Wasserstoffperoxids, der der Destillationskolonne flüssig zugeführt, im Verfahren nicht verdampft wird, wird gegenüber dem Verfahren von Figur 1 auch weniger Energie benötigt. Bei der in Figur 2 gezeigten Ausführungsform wird ein Teil der im Vorverdampfer (1) durch Verdampfung erzeugten Brüden (5) in einem zusätzlichen Kühler (11) kondensiert und als ein dritter konzentrierter Wasserstoffperoxidstrom (12) entnommen. In dieser Ausführungsform kann mit dem erfindungsgemäßen Verfahren zusätzlich auch ein durch Destillation von schwerflüchtigen Verbindungen weitgehend gereinigtes Wasserstoffperoxid erhalten werden, wobei die Menge und Konzentration dieses gereinigten Wasserstoffperoxids durch die Wahl der Betriebsbedingungen für den Vorverdampfer (1) und den zusätzlichen Kühler (11) in weiten Grenzen gewählt werden können.

Das nachfolgende Beispiel illustriert die in Figur 2 gezeigte Ausführungsform des erfindungsgemäßen Verfahrens. Der Vorverdampfer (1) wird bei einem Druck von 120 mbar und einer Sumpftemperatur von 61 °C betrieben. Die Destillationskolonne (2) wird bei einem Druck am Kolonnenkopf von 104 mbar und einer Sumpftemperatur von 70 °C betrieben. Dem Vorverdampfer werden 10000 kg/h zu konzentrierende Wasserstoffperoxidlösung (4) mit einer Konzentration von 40,0 Gew.-% zugeführt. Im Vorverdampfer werden 2502 kg/h Brüden (5) mit einem Wasserstoffperoxidgehalt von 8,5 Gew.-% erzeugt. Aus den Brüden wird durch Partialkondensation im zusätzlichen Kühler (11) ein konzentrierter Wasserstoffperoxidstrom (12) mit einer Konzentration von 45,1 Gew.-% in einer Menge von 152 kg/h gewonnen und die nicht kondensierten Brüden werden dampfförmig der Destillationskolonne (2) zugeführt. Vom Sumpfprodukt (6) des Vorverdampfers werden 1830 kg/h als konzentrierter Wasserstoffperoxidstrom (7) mit einer Konzentration von 50,5 Gew.-% entnommen und das restliche erhaltene Sumpfprodukt flüssig der Destillationskolonne (2) zugeführt. Der Destillationskolonne (2) wird zur Erzeugung des Rücklaufs am Kolonnenkopf 769 kg/h Wasser zugeführt. In der Destillationskolonne wird das Wasserstoffperoxid durch Zufuhr von 1487 kW Wärme zu dem Verdampfer der Destillationskolonne weiter aufkonzentriert und dem Sumpf der Kolonne wird ein konzentrierter Wasserstoffperoxidstrom (10) mit einer Konzentration von 70,5 Gew.-% in einer Menge von 4173 kg/h entnommen. Von den in der Destillationskolonne erzeugten Brüden werden 1094 kg/h über den Brüdenverdichter (3) auf einen Druck von 320 mbar verdichtet und mit den verdichteten Brüden wird der Vorverdampfer (1) beheizt. Die restlichen in der Destillationskolonne erzeugten Brüden werden kondensiert. Der Energiebedarf für die Brüdenverdichtung mit Dampf in dem als Gasstrahlpumpe ausgeführten Brüdenverdichter (3) liegt bei 976 kW.

### Liste der Bezugszeichen in den Figuren:

(1) Vorverdampfer
(2) Destillationskolonne
(3) Brüdenverdichter
(4) zu konzentrierende Wasserstoffperoxidlösung
(5) Brüden aus dem Vorverdampfer
(6) Sumpfprodukt aus dem Vorverdampfer
(7) erste konzentrierte Wasserstoffperoxidlösung
(8) Brüden aus der Destillationskolonne
(9) Sumpfprodukt der Destillationskolonne
(10) zweite konzentrierte Wasserstoffperoxidlösung
(11) zusätzlicher Kühler
(12) dritte konzentrierte Wasserstoffperoxidlösung

## Patentansprüche

1. Verfahren zum Aufkonzentrieren von wässriger Wasserstoffperoxidlösung zu zwei Wasserstoffperoxidströmen unterschiedlicher Konzentration, wobei in einer Vorrichtung umfassend einen Vorverdampfer (1), eine Destillationskolonne (2) und einen Brüdenverdichter (3) kontinuierlich die zu konzentrierende wässrige Wasserstoffperoxidlösung (4) dem Vorverdampfer zugeführt wird, im Vorverdampfer durch Verdampfung erzeugte Brüden (5) der Destillationskolonne zugeführt werden, im Vorverdampfer erhaltenes Sumpfprodukt (6) als ein erster konzentrierter Wasserstoffperoxidstrom (7) entnommen wird, in der Destillationskolonne erzeugte Brüden (8) der Destillationskolonne am Kolonnenkopf entnommen, über den Brüdenverdichter verdichtet und zur Beheizung des Vorverdampfers verwendet werden und in der Destillationskolonne erhaltenes Sumpfprodukt (9) als ein zweiter konzentrierter Wasserstoffperoxidstrom (10) entnommen wird,
**dadurch gekennzeichnet,**
**dass** ein Teil des im Vorverdampfer erhaltenen Sumpfprodukts der Destillationskolonne flüssig zugeführt wird.

2. Verfahren nach Anspruch 1,
**dadurch gekennzeichnet,**
**dass** der der Destillationskolonne zugeführte Teil des im Vorverdampfer erhaltenen Sumpfprodukts der Destillationskolonne in einem mittleren Abschnitt zugeführt wird.

3. Verfahren nach Anspruch 1 oder 2,
**dadurch gekennzeichnet,**
**dass** im Vorverdampfer durch Verdampfung erzeugte Brüden der Destillationskolonne in einem mittleren Abschnitt zugeführt werden.

4. Verfahren nach einem der Ansprüche 1 bis 3,
**dadurch gekennzeichnet,**
**dass** ein Teil der im Vorverdampfer durch Verdampfung erzeugten Brüden in einem zusätzlichen Kühler (11) kondensiert und als ein dritter konzentrierter Wasserstoffperoxidstrom (12) entnommen wird.

5. Verfahren nach einem der Ansprüche 1 bis 4,
**dadurch gekennzeichnet,**
**dass** die Temperatur im Sumpf der Destillationskolonne um 5 bis 15 °C höher als die Temperatur im Sumpf des Vorverdampfers ist.

6. Verfahren nach einem der Ansprüche 1 bis 5,
**dadurch gekennzeichnet,**
**dass** die Konzentration des zweiten konzentrierten Wasserstoffperoxidstroms höher ist als die Konzentration des ersten konzentrierten Wasserstoffperoxidstroms.

7. Verfahren nach einem der Ansprüche 1 bis 6,
**dadurch gekennzeichnet,**
**dass** als Brüdenverdichter eine mechanischer Brüdenkompressor, vorzugsweise ein einstufiger mechanischer Brüdenkompressor, eingesetzt wird.

8. Verfahren nach einem der Ansprüche 1 bis 6,
**dadurch gekennzeichnet,**
**dass** als Brüdenverdichter eine Gasstrahlpumpe mit Wasserdampf als Treibgas eingesetzt wird.

9. Verfahren nach einem der Ansprüche 1 bis 8,
**dadurch gekennzeichnet,**
**dass** eine Destillationskolonne mit einer Packung oder Schüttung aus Metall verwendet wird.

## Claims

1. Process for concentrating aqueous hydrogen peroxide solution to give two hydrogen peroxide streams of different concentration, in which, in an apparatus comprising a preevaporator (1), a distillation column (2) and a vapour compressor (3), the aqueous hydrogen peroxide solution to be concentrated (4) is continuously fed into the preevaporator, vapour (5) produced by evaporation in the preevaporator is fed to the distillation column, bottom product (6) obtained in the preevaporator is withdrawn as a first concentrated hydrogen peroxide stream (7), vapour (8) produced in the distillation column is withdrawn from the distillation column at the top of the column, compressed with the vapour compressor and used for heating the preevaporator and bottom product (9) obtained in the distillation column is withdrawn as a second concentrated hydrogen peroxide stream (10),
**characterized in that**
part of the bottom product obtained in the preevaporator is fed in liquid form to the distillation column.

2. Process according to Claim 1,
**characterized in that**
the part of the bottom product obtained in the preevaporator which is fed to the distillation column is fed into the distillation column in a middle section.

3. Process according to Claim 1 or 2,
**characterized in that**
vapour produced by evaporation in the preevaporator is fed to the distillation column in a middle section.

4. Process according to any one of Claims 1 to 3,
**characterized in that**
part of the vapour produced by evaporation in the preevaporator is condensed in an additional condenser (11) and taken off as a third concentrated hydrogen peroxide stream (12).

5. Process according to any one of Claims 1 to 4,
**characterized in that**
the temperature at the bottom of the distillation column is from 5 to 15°C higher than the temperature at the bottom of the preevaporator.

6. Process according to any one of Claims 1 to 5,
**characterized in that**
the concentration of the second concentrated hydrogen peroxide stream is higher than the concentration of the first concentrated hydrogen peroxide stream.

7. Process according to any one of Claims 1 to 6,
**characterized in that**
a mechanical vapour compressor, preferably a single-stage mechanical vapour compressor, is used as vapour compressor.

8. Process according to any one of Claims 1 to 6,
**characterized in that**
a gas jet pump using steam as propellant gas is used as vapour compressor.

9. Process according to any one of Claims 1 to 8,
**characterized in that**
a distillation column having a structured packing or random packing made of metal is used.

## Revendications

1. Procédé pour la concentration d'une solution aqueuse de peroxyde d'hydrogène en deux flux de peroxyde d'hydrogène de concentrations différentes, dans lequel, dans un dispositif comprenant un pré-évaporateur (1), une colonne de distillation (2) et un compresseur de vapeurs (3), la solution aqueuse de peroxyde d'hydrogène (4) à concentrer est introduite en continu dans le pré-évaporateur, les vapeurs (5) produites dans le pré-évaporateur par évaporation sont introduites dans la colonne de distillation, le produit de fond (6) obtenu dans le pré-évaporateur est prélevé comme premier flux de peroxyde d'hydrogène (7) concentré, les vapeurs (8) produites dans la colonne de distillation sont prélevées de la colonne de distillation en tête de colonne, comprimée via le compresseur de vapeur et utilisées pour le chauffage du pré-évaporateur et le produit du fond (9) obtenu dans la colonne de distillation est prélevé comme deuxième flux de peroxyde d'hydrogène (10) concentré, **caractérisé en ce qu'**une partie du produit du fond obtenu dans le pré-évaporateur est introduite sous forme liquide dans la colonne de distillation.

2. Procédé selon la revendication 1, **caractérisé en ce que** la partie du produit du fond obtenu dans le pré-évaporateur introduite dans la colonne de distillation est introduite dans la colonne de distillation dans une section centrale.

3. Procédé selon la revendication 1 ou 2, **caractérisé en ce que** les vapeurs produites dans le pré-évaporateur par évaporation sont introduites dans la colonne de distillation dans une section centrale.

4. Procédé selon l'une quelconque des revendications 1 à 3, **caractérisé en ce qu'**une partie des vapeurs produites dans le pré-évaporateur par évaporation est condensée dans un refroidisseur supplémentaire (11) et est prélevée sous forme de troisième flux de peroxyde d'hydrogène (12) concentré.

5. Procédé selon l'une quelconque des revendications 1 à 4, **caractérisé en ce que** la température dans le fond de la colonne de distillation est supérieure de 5 à 15°C à la température dans le fond du pré-évaporateur.

6. Procédé selon l'une quelconque des revendications 1 à 5, **caractérisé en ce que** la concentration du deuxième flux de peroxyde d'hydrogène concentré est supérieure à la concentration du premier flux de peroxyde d'hydrogène concentré.

7. Procédé selon l'une quelconque des revendications 1 à 6, **caractérisé en ce qu'**on utilise, comme compresseur de vapeurs, un compresseur de vapeurs mécanique, de préférence un compresseur de vapeurs mécanique à un étage.

8. Procédé selon l'une quelconque des revendications 1 à 6, **caractérisé en ce qu'**on utilise comme compresseur de vapeurs une pompe à jet de gaz avec de la vapeur d'eau comme gaz propulseur.

9. Procédé selon l'une quelconque des revendications 1 à 8, **caractérisé en ce qu'**on utilise une colonne de distillation présentant un garnissage structuré ou en vrac en métal.
